Europäisches Patentamt

European Patent Office

Office européen des brevets

(11) Numéro de publication: **0 373 029 B1**

## FASCICULE DE BREVET EUROPEEN

(45) Date de publication de fascicule du brevet: **02.03.94**   (51) Int. Cl.⁵: **G09B 9/04**

(21) Numéro de dépôt: **89403258.0**

(22) Date de dépôt: **24.11.89**

(54) **Simulateur de mouvement pour l'entraînement à la conduite de véhicule.**

(30) Priorité: **30.11.88 FR 8815665**

(43) Date de publication de la demande:
**13.06.90 Bulletin 90/24**

(45) Mention de la délivrance du brevet:
**02.03.94 Bulletin 94/09**

(84) Etats contractants désignés:
**BE CH DE ES GB IT LI**

(56) Documents cités:
**FR-A- 1 511 683**
**GB-A- 2 179 605**

(73) Titulaire: **THOMSON-CSF**
**173, Boulevard Haussmann**
**F-75008 Paris(FR)**

(72) Inventeur: **Alet, Robert**
**THOMSON-CSF**
**SCPI**
**Cédex 67**
**F-92045 Paris la Défense(FR)**
Inventeur: **Jezequel, Roland**
**THOMSON-CSF**
**SCPI**
**Cédex 67**
**F-92045 Paris la Défense(FR)**

(74) Mandataire: **Chaverneff, Vladimir et al**
**THOMSON-CSF**
**SCPI**
**B.P. 329**
**50, rue Jean-Pierre Timbaud**
**F-92402 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte à un simulateur de mouvement pour l'entraînement à la conduite de véhicule, de char de combat plus particulièrement.

Les cabines des simulateurs actuels sont montées sur des plateformes animées par des vérins hydrauliques permettant de leur appliquer principalement des rotations suivant trois axes : roulis, tangage et lacet (voir par exemple GB-A-2 179 605).

Les accélérations et les débattements angulaires sont identiques à ceux rencontrés lors des mouvements des chars sur le terrain.

Néanmoins, il apparaît que la formation d'un élève conducteur n'exige pas que les valeurs absolues des paramètres de simulation soient toutes reproduites avec exactitude.

- Certaines parties du corps humain enregistrent les accélérations auxquelles celui-ci est soumis à la manière de capteurs accélérométriques. Les informations sont traitées par le cerveau et analysées. Après analyse, le cerveau peut transmettre un résultat brut : "je subis un effort de droite à gauche" et/ou commander les muscles concernés pour retrouver la situation d'origine.
- Ce capteur (éléments de l'oreille interne et de la colonne vertébrale) est "pré-contraint" par le champ de gravité terrestre : référentiel $\vec{g}$. Il est étalonné par le cerveau, par mise en mémoire de toutes les situations antérieures vécues (croissance du corps, poids, expérience, relations de cause à effet : vue/attitude...). Comme pour tout étalonnage, un zéro de référence existe. Il est obtenu quand l'axe de la colonne de vertébrale est colinéaire à $\vec{g}$.
- Les notions de : "avant/arrière", "droite/gauche", sont liées aux axes du corps : colonne vertébrale→tête et axe de la vue.

Par contre, la notion de haut et bas est plus liée à l'axe du vecteur du champ de gravitation qu'à l'axe de la colonne vertébrale. En position normale, sur terre, le haut est équivalent à "tête", le bas à "pied". En apesanteur cette notion n'a plus de sens.

- En conclusion, le corps humain ressent des accélérations en valeur relative, en général, et donc des variations d'attitude par le biais d'un champ gravitationnel, en particulier. Le cerveau analyse et en déduit le sens, la direction et la variation d'intensité, par contre il ne peut en donner une valeur absolue. C'est là qu'intervient la simulation.

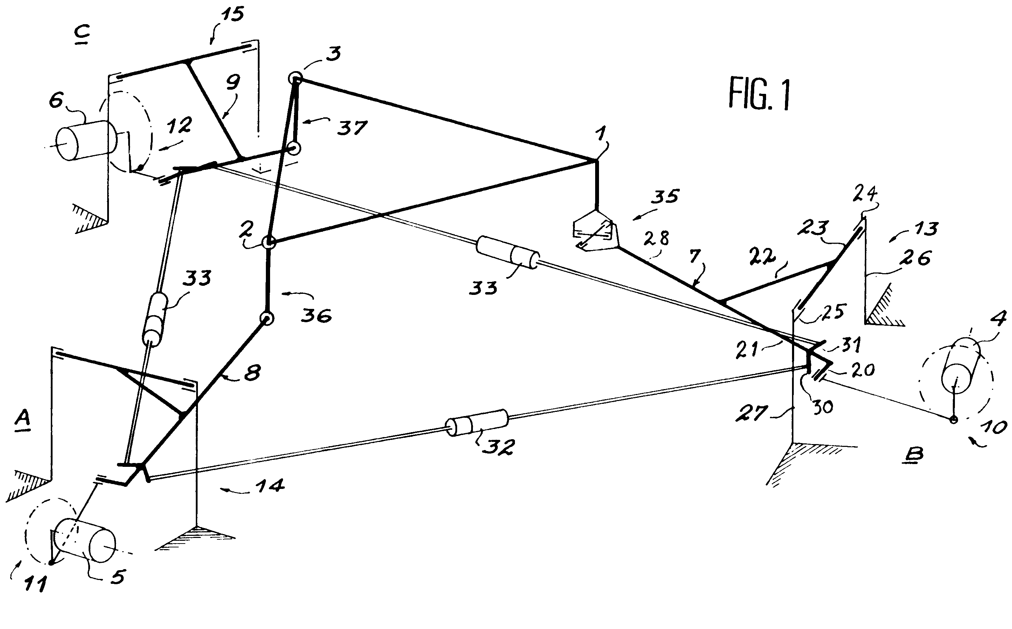

Pour éviter de surdimensionner les composants du simulateur, on est amené à analyser la fonction f = valeur pédagogique du simulateur/réalisme (voir figure 1).

On considère que la conduite normale, sur route ou en tout terrain, pour laquelle le char a été conçu représente 95 % des cas. Les 5 % des cas restants qui conduiraient au réalisme parfait sont exceptionnels (collision, renversement...) et n'apportent pas de valeur pédagogique.

Par exemple, dans les 5 % des cas précités, une configuration possible pour un char réel est de monter une pente de 30°.

Dans le cadre de la simulation, une inclinaison de la cabine de l'ordre de 13° est suffisante pour donner au pilote le sens et la direction de l'inclinaison. Son cerveau n'ayant pas tous les éléments pour déterminer la valeur absolue de la pente fait appel à ses autres sens :

a) la vue : l'image qui lui est présentée fait bien 30° par rapport à l'horizontale,

b) l'ouïe : le bruit du moteur est fonction directe de l'angle de la pente, dans ce cas 30°,

c) sa mémoire : fonction de l'expérience déjà vécue.

Le cerveau est donc abusé par les références qui lui sont imposées de façon très réaliste par les effets a, b et c, l'attitude du corps confirmant l'analyse du cerveau simplement par le sens et la direction.

Ces éléments de réflexion conduisent à définir un simulateur de mouvement plus simple, moins encombrant, moins coûteux et de performance optimisée à l'utilisation.

- Les systèmes hydrauliques actuels, très performants, ne sont utilisés qu'à 50 % de leurs capacités dans 95 % du temps de simulation et imposent une infrastructure adaptée (base en béton armé, hauteur sous plafond importante, centrale hydraulique avec isolation acoustique du local...).
- Les systèmes hydrauliques demandent un personnel de maintenance relativement spécialisé, le rendement énergétique global est faible et nécessite une réfrigération de l'huile, la plupart des composants sont relativement onéreux.
- En conclusion, même en réduisant les performances des systèmes hydrauliques actuels, la réduction de coût n'est pas sensible.

L'invention a pour objet un simulateur de mouvement de faible encombrement, d'exploitation facile, de maintenance ne nécessitant pas de personnel spécialisé et de performances suffisantes pour la simulation à laquelle il est destiné.

Le simulateur conforme à l'invention comprend au moins trois actionneurs disposés aux sommets d'un triangle, sensiblement équilatéral, reliés à au moins trois points correspondants de fixation de la plateforme de la cabine par des bras de leviers dont une des extrémités est reliée à l'actionneur correspondant par un ensemble bielle-manivelle l'autre extrémité de l'un des bras de leviers étant reliée à un point de fixation de la plateforme par une articulation à deux degrés de liberté, et l'autre extrémité des autres bras de leviers étant reliée à chaque fois à l'un des autres points de fixation de la plateforme par une articulation à au moins quatre degrés de liberté.

De préférence, les actionneurs sont électriques.

Selon un mode de réalisation avantageux de l'invention, les actionneurs sont reliés aux articulations des bras de leviers par des bielles et manivelles limitant le débattement des bras de leviers. Ceci permet d'éviter des sécurités du type à butée et à détecteur de fin de course.

La présente invention sera mieux comprise à la lecture de la description détaillée d'un mode de réalisation, pris comme exemple non limitatif, et illustré par le dessin annexé, sur lequel :

- la figure 1 est une vue schématique en perspective du dispositif d'actionnement de cabine de simulateur conforme à l'invention,

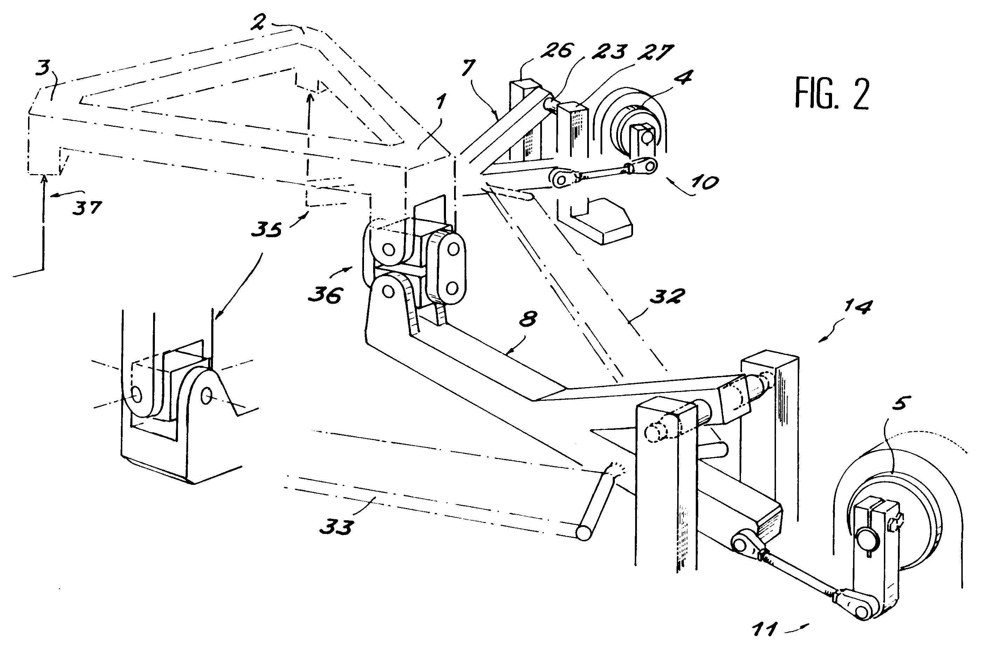

- la figure 2 est une vue en perspective simplifiée des bras de leviers du dispositif de la figure 1,
- la figure 3 est une vue de dessus et de détail d'un des dispositifs actionneurs du dispositif de la figure 1 et de l'articulation correspondante, et
- la figure 4 est une vue de face et de détail d'un actionneur à limitation de débattement d'un bras de levier du dispositif de la figure 1.

Le dispositif de mouvement de cabine de simulateur décrit ci-dessous est destiné à imprimer à une cabine de simulateur de véhicule, tel qu'un char de combat, des mouvements dont l'ampleur n'est pas, comme précisé ci-dessus en préambule, aussi grande que dans la réalité, mais qui permet, dans la plupart des cas, d'assurer un réalisme satisfaisant et de conférer à la simulation une bonne valeur pédagogique.

La cabine du simulateur, ainsi que son dispositif de commande, ne fait pas partie de l'invention, et n'a donc pas été représentée. Il suffit de savoir que cette cabine est un habitacle dont l'intérieur reproduit aussi fidèlement que possible celui du véhicule simulé, fixé sur une plateforme polygonale.

Le dispositif de mouvement de cabine est fixé sur la face inférieure de ladite plateforme en trois points 1,2,3 (figure 1) disposés aux sommets d'un triangle sensiblement équilatéral dont le centre coïncide le mieux possible avec le centre de gravité de la plateforme munie de la cabine, ceci afin d'assurer un bon équilibrage.

Le dispositif de mouvement de cabine est mû par trois actionneurs 4,5,6 reliés aux trois points 1,2,3 par des liaisons articulées respectivement référencées 7, 8, 9. Les actionneurs 4 à 6 sont, de préférence, des moteurs électriques.

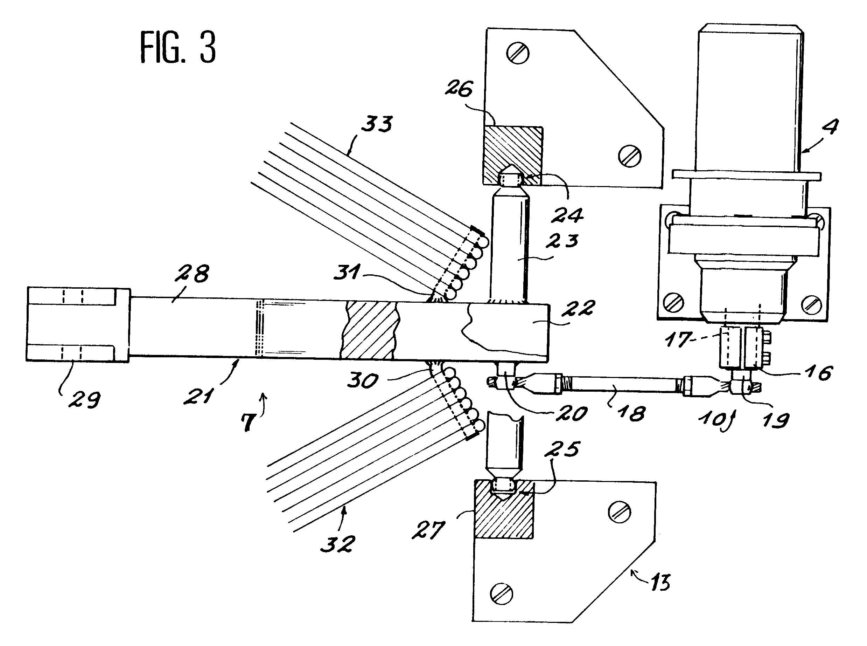

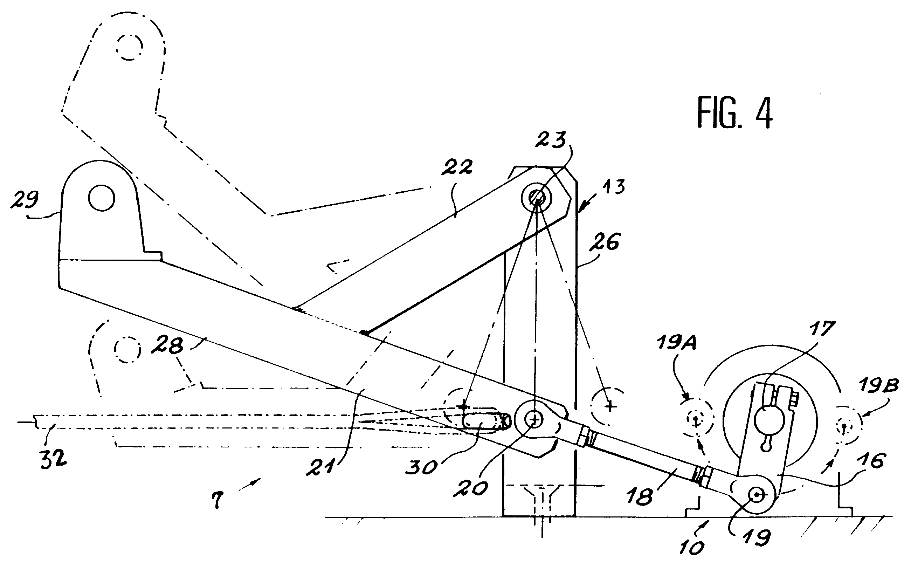

Chaque actionneur 4 à 6 entraîne le bras de levier correspondant par l'intermédiair d'un ensemble bielle-manivelle respectivement référencé 10 à 12 dans son ensemble. Cet ensemble bille-manivelle est relié à une articulation dite "pantin", respectivement référencée 13 à 15 dans son ensemble. Ces ensembles bielles-manivelles et articulations étant tous identiques, on n'en décrira en détail qu'un seul à savoir l'ensemble bielle-manivelle 10 et l'articulation 13, relatif au moteur 4, en référence aux figures 3 et 4.

La manivelle 16 de l'ensemble 10 est fixée sur l'arbre 17 du moteur 4. Une biellette 18 est montée libre en rotation sur un maneton 19 fixé au bout de la manivelle 16 parallèlement à l'arbre 17. A son autre extrémité, la biellette 18 est montée libre en rotation sur un axe 20 fixé à l'extrémité de commande du dispositif 13.

Le dispositif 13 a une forme générale de "Y" qui est perpendiculaire à l'axe 17. L'extrémité de l'une des branches de cet "Y", branche référencée 21, porte l'axe 20. On fixe à l'extrémité d'une autre branche du "Y", référencée 22, un axe 23 traversant cette branche. Cet axe 23 est monté libre en rotation sur des paliers 24,25 supportés par des potences fixes 26,27 respectivement. La dernière branche du "Y", référencée 28, a son extrémité conformée en chape 29 de support pour un joint de cardan qui est simple pour l'un des bras, par exemple le bras 7, et double pour les deux autres bras, par exemple les bras 8 et 9.

Les débattements du dispositif 13 sont limités par la manivelle 16. On a représenté en figure 4 en traits continus une position moyenne du dispositif 13, et en traits mixtes ses positions extrêmes qui correspondent à des positions sensiblement diamétralement opposées du maneton 19, référencées 19A et 19B sur le dessin.

On fixe sur la branche 21 du dispositif 13, près de l'axe 20, de chaque côté de la branche, une tige de fixation de dispositif équilibreur. Ces tiges sont référencées 30,31 et disposées symétriquement par rapport à la branche 21. Le dispositif de l'invention comporte trois équilibreurs 32,33,34 reliant respectivement les premières branches (branche 21 et ses homologues) des "Y" des liaisons 7-8,8-9, et 9-7. Ces équilibreurs délimitent ainsi un triangle sensiblement équilatéral (dans le cas où les actionneurs 4,5,6 sont disposés aux sommets d'un triangle sensiblement équilatéral). Par conséquent, il est avantageux que les tiges 30,31 formant alors entre elles un angle de 120° (60° par rapport à la branche 21).

Les équilibreurs 32 à 34 sont des dispositifs compensant le poids de la cabine du simulateur avec sa plateforme. Ils sont donc, dans le cas présent, des dispositifs exerçant une force de traction sur leurs points d'attache. Selon le mode de réalisation préféré, représenté sur le dessin, ce sont des sandows, qui ont l'avantage d'avoir un grand allongement pour une faible variation d'effort.

L'articulation 35 reliant la liaison 7 au point de fixation 1 est du type à deux degrés de liberté, par exemple un joint de cardan simple. Les artlculations 36,37 reliant respectivement les liaisons 8,9 aux points de fixation 2,3 sont du type à au moins quatre degrés de liberté, par exemple des joints de cardan doubles.

Les points de fixation 1 à 3 de la plateforme de cabine étant disposés en triangle les liaisons entre les actionneurs et ces points de fixation ont des mouvements simples et d'amplitude réduite.

Le système décrit ci-dessus et tel que représenté en figure 1 est dit "porteur". C'est-à-dire que la cabine est placée au-dessus des articulations 35 à 37. Une autre version dite "suspendu" consiste à placer les articulations 35 à 37 au-dessus de la base représentée par le triangle 1,2,3.

## Revendications

1. Simulateur de mouvement pour l'entraînement à la conduite de véhicule, caractérisé par le fait qu'il comprend au moins trois actionneurs ((4,5,6) disposés aux sommets d'un triangle, reliés à au moins trois points correspondants, disposés en triangle, de fixation (1,2,3) d'une plateforme d'une cabine du simulateur par des bras de leviers (7,8,9) dont une des extrémités est reliée à l'actionneur correspondant par une articulation à deux degrés de liberté (10,11,12), l'autre extrémité de l'un des bras de leviers (7) étant reliée à un point de fixation (1) de la plateforme par une articulation à deux degrés de liberté (35), et l'autre extrémité des autres bras de leviers étant reliée à chaque fois à l'un des autres points de fixation (2,3) de la plateforme par une articulation à au moins quatre degrés de liberté (36,37).

2. Simulateur selon la revendication 1, caractérisé par le fait que les triangles sont sensiblement équilatéraux.

3. Simulateur selon l'une des revendications 1 ou 2, caractérisé par le fait que les actionneurs sont des moteurs électriques.

4. Simulateur selon l'une des revendications précédentes, caractérisé par le fait que les actionneurs sont reliés aux articulations des bras de leviers par des manivelles et bielles (16 à 19) limitant le débattement des bras de leviers.

5. Simulateur selon l'une des revendications précédentes, caractérisé par le fait que les bras de leviers sont des "pantins" en forme de "Y".

6. Simulateur selon l'une des revendications précédentes, caractérisé par le fait que l'articulation (35) à deux degrés de liberté, disposée du côté de l'un des points de fixation de la plateforme est un joint de cardan simple.

7. Simulateur selon l'une des revendications précédentes, caractérisé par le fait que les articulations (36,37) à au moins quatre degrés de liberté sont des joints de cardan doubles.

## Claims

1. Movement simulator for learning to drive a vehicle, characterized in that it comprises at least three actuators (4, 5, 6) arranged at the apexes of a triangle, connected to at least three corresponding fixing points (1, 2, 3), arranged in a triangle, of a platform of a cabin of the simulator, by lever arms (7, 8, 9) one of the ends of which is connected to the corresponding actuator by an articulation (10, 11, 12) with two degrees of freedom, the other end of one of the lever arms (7) being connected to a fixing point (1) of the platform by an articulation (35) with two degrees of freedom, and the other end of the other lever arms being connected each time to one of the other fixing points (2, 3) of the platform by an articulation (36, 37) with at least four degrees of freedom.

2. Simulator according to Claim 1, characterized in that the triangles are substantially equilateral.

3. Simulator according to one of Claims 1 and 2, characterized in that the actuators are electric motors.

4. Simulator according to one of the preceding claims, characterized in that the actuators are connected to the articulations of the lever arms by cranks and connecting rods (16 to 19) limiting the excursion of the lever arms.

5. Simulator according to one of the preceding claims, characterized in that the lever arms are Y-shaped "jumping jacks".

6. Simulator according to one of the preceding claims, characterized in that the articulation (35) with two degrees of freedom, arranged on the side of one of the fixing points of the platform, is a simple universal joint.

7. Simulator according to one of the preceding claims, characterized in that the articulations (36, 37) with at least four degrees of freedom, are double universal joints.

**Patentansprüche**

1. Bewegungssimulator für die Ausbildung zum Führen von Fahrzeugen, dadurch gekennzeichnet, daß er wenigstens drei Betätigungselemente (4, 5, 6) enthält, die an den Spitzen eines Dreiecks angeordnet und mit wenigstens drei entsprechenden, in einem Dreieck angeordneten Befestigungspunkten (1, 2, 3) einer Plattform einer Simulatorkabine über Hebelarme (7, 8, 9) verbunden sind, von denen ein Ende mit dem entsprechenden Betätigungselement über ein Gelenk (10, 11, 12) mit zwei Freiheitsgraden verbunden ist, wobei das andere Ende von einem der Hebel (7) mit einem Befestigungspunkt (1) der Plattform über ein Gelenk (35) mit drei Freiheitsgraden verbunden ist und wobei die anderen Enden der anderen Hebelarme jeweils mit einem der anderen Befestigungspunkte (2, 3) der Plattform über ein Gelenk (36, 37) mit wenigstens vier Freiheitsgraden verbunden sind.

2. Simulator nach Anspruch 1, dadurch gekennzeichnet, daß die Dreiecke im wesentlichen gleichseitig sind.

3. Simulator nach einem der Ansprüche 1 oder 2, dadurch gekennzeichnet, daß die Betätigungselemente Elektromotoren sind.

4. Simulator nach einem der vorhergehenden Ansprüche, dadurch gekennzeichnet, daß die Betätigungselemente mit den Gelenken der Hebelarme über Kurbelantriebe (16 bis 19) verbunden sind, die den Bewegungsweg der Hebelarme begrenzen.

5. Simulator nach einem der vorhergehenden Ansprüche, dadurch gekennzeichnet, daß die Hebelarme Y-förmige Schwenkarme ("Hampelmann-Hebel") sind.

6. Simulator nach einem der vorhergehenden Ansprüche, dadurch gekennzeichnet, daß das Gelenk (35) mit zwei Freiheitsgraden, das an einem der Befestigungspunkte der Plattform angeordnet ist, ein einfaches Kardangelenk ist.

7. Simulator nach einem der vorhergehenden Ansprüche, dadurch gekennzeichnet, daß die Gelenke (36, 37) mit wenigstens vier Freiheitsgraden doppelte Kardangelenke sind.

FIG. 1

EP 0 373 029 B1

FIG. 2

EP 0 373 029 B1

# FIG. 3

EP 0 373 029 B1

FIG. 4

EP 0 373 029 B1